# DEMANDE DE BREVET EUROPEEN

(11) **EP 0 617 258 A1**
(43) Date de publication de la demande: **28.09.1994**
(21) Numéro de dépôt: 94200720.4
(22) Date de dépôt: 21.03.1994
(51) Int. Cl.: G01C 15/00

(54) **Goniomètre portatif du type à deux bras pivotants**

(30) Priorité: 24.03.1993 IT VI930044
(71) Demandeur: MICRO ITALIANA S.p.A., I-36071 Arzignano (Vicenza) (IT)
(72) Inventeur: Doriguzzi Bozzo, Mario, Milan (IT)
(74) Mandataire: Bettello, Luigi, Dott. Ing.

(57) **Abrégé**

Le goniomètre, du genre comprennt un bras (1) propre à prendre appui sur un plan de référence et un bras mobile (2) susceptible de se déplacer par rapport au premier bras suivant un angle compris entre 0 et 360°, est équipé d'au moins un émetteur de rayon laser visible (4) qui permet la projection du rayon suivant une direction parallèle à l'axe du bras muni dudit émetteur, en direction de points inaccessibles à l'utilisateur, en permettant ainsi de mesurer l'angle défini entre le rayon laser et le plan de référence.

## Description

La présente invention a pour objet le ganiomètre portatif qui est défini à la revendication 1.

L'originalité de ce goniomètre réside principalement dans le fait qu'il comprend au moins un émetteur de rayon laser visible qui est monté sur l'un au moins de ses bras articulés afin que le rayon émis soit orienté parallèlement à l'axe du bras considéré en vue de pouvoir être pointé en direction d'un point inaccessible à l'opérateur et d'assurer ainsi la mesure de l'angle défini entre la droite suivant laquelle se propage le rayon laser et l'axe de l'autre bras du goniomètre.

On peut prévoir un second émetteur de rayon laser orienté co-axialement au premier, mais à l'opposé de celui-ci, afin que le rayon émis par ce second émetteur puisse être dirigé à l'opposé de celui du premier émetteur, par exemple en vue du contrôle du plan exact de deux points situés sur une même droite.

Dans une autre forme de réalisation, on prévoit de faire comporter à chacun des bras de l'appareil un émetteur séparé orienté parallèlement à l'axe du bras qui le porte, afin de permettre de relever l'angle existant entre les directions des deux rayons laser lorsqu'ils sont dirigés vers des points inaccessibles à l'opérateur.

Le dessin annexé, donné à titre d'exemple, permettra de mieux comprendre l'invention, les caractéristiques qu'elle présente et les avantages qu'elle est susceptible de procurer :
Fig. 1 est une vue de côté montrant schématiquement l'agencement d'un goniomètre suivant l'invention, équipé d'un émetteur de rayon laser monté sur l'un des bras de l'appareil parallèlement à l'axe du bras considéré.
Fig. 2 reproduit fig. 1, l'appareil étant réglé pour la mesure d'un angle droit.
Fig. 3 montre une variante de réalisation du goniomètre, ici équipé de deux émetteurs de rayon laser orientés à l'opposé l'un de l'autre, mais disposés suivant une même droite parallèle à l'axe du bras qui les supporte.
Fig. 4 illustre une autre forme de réalisation, suivant laquelle il est prévu deux émetteurs montés sur l'un et l'autre des deux bras, en étant bien entendu orientés parallèlement aux axes de ceux-ci.
Fig. 5 montre une quatrième forme de réalisation du goniomètre suivant l'invention.

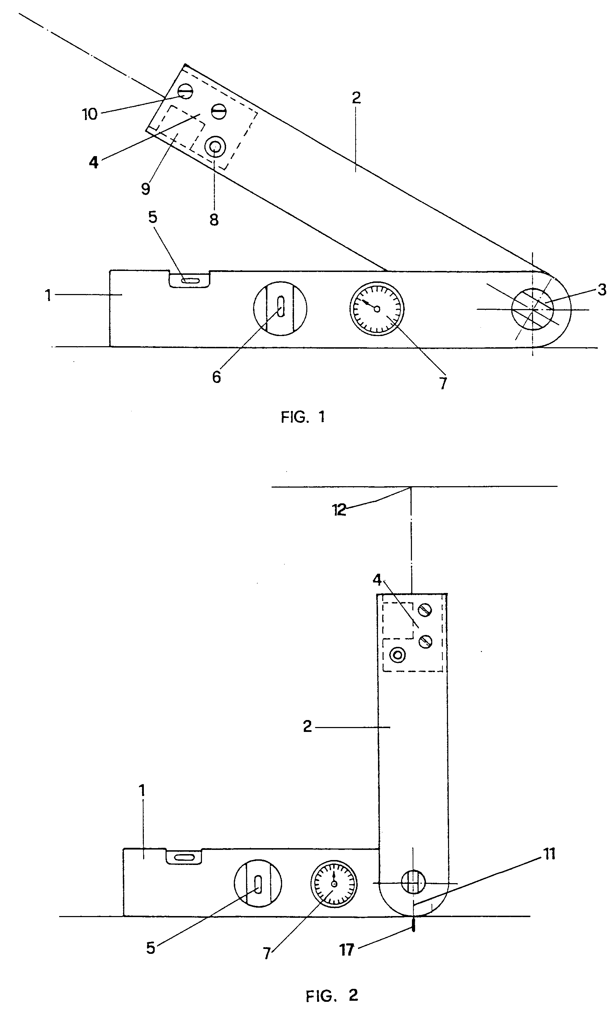

Le goniomètre représenté en fig. 1 comprend un bras 1 dit "de référence" et un bras 2 relié au bras 1 par un pivot 3. Ce bras 2 supporte un émetteur de rayon laser 4, agencé de manière à ce que le rayon émis soit parallèle à l'axe du bras considéré.

De façon usuelle, on a prévu sur le bras 1 deux niveaux à bulle 5 et 6 pour le contrôle de l'horizontalité et de la verticalité du bras 1, ce dernier pouvant aussi bien prendre appui sur un plan horizontal que contre un plan vertical. Aucun niveau à bulle n'est prévu sur le bras 2.

Le bras 1 supporte également un instrument 7 pour la mesure de l'angle défini par les deux bras 1 et 2, ledit instrument étant associé à une transmission mécanique de type en soi connu, par exemple du genre décrit dans la demande de brevet italien N° VI92A000105 déposée le 25 Juin 1992 au nom de la Demanderesse.

De manière avantageuse, on a prévu sur le bras 2 qui supporte l'émetteur 4 un interrupteur 8 et la batterie 9 pour l'alimentation électrique de l'émetteur précité, étant observé que celui-ci peut avoir une autre source d'alimentation.

L'émetteur 4 est préférablement monté au point milieu de la largeur du bras 2, si bien que le rayon laser émis est orienté suivant l'axe de ce bras qui passe par le pivot 3. L'alignement exact du rayon émis par l'émetteur 4 est opéré à l'aide de trois paires de vis de réglage 10, disposées à 120° les unes par rapport aux autres.

En fig. 2, on peut voir que le bras 2 comporte un index de référence 11 orienté suivant l'axe médian dudit bras, de la même manière que l'émetteur 4, si bien qu'il est possible de faire coincider suivant une droite orientée verticalement, le point 17 prévu sur le plan horizontal d'appui du bras 1 et le point 12 disposé par exemple sur le plafond et formé par la tache lumineuse engendrée par le rayon laser.

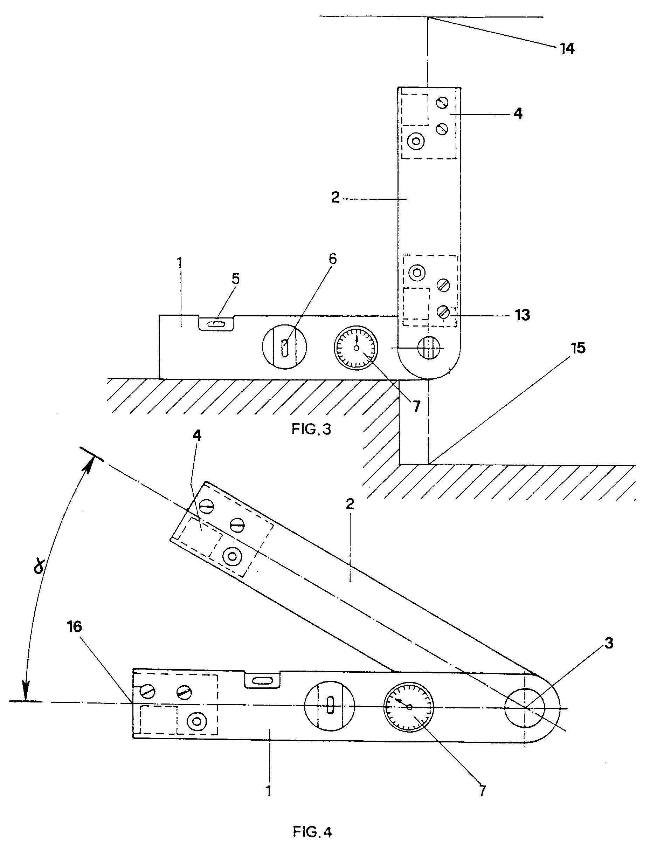

En fig. 3, on a supposé que le goniomètre était équipé de deux émetteurs différents, respectivement référencés 4 et 13, tous deux disposés sur le bras 2 en étant parfaitement alignés co-axialement l'un par rapport à l'autre, mais en étant disposés à l'opposé l'un de l'autre de façon à ce que lesdits émetteurs projettent leur rayon laser, par exemple l'un au plafond, l'autre au sol, suivant une direction parallèle au bras 2.

Il est ainsi possible de vérifier la verticalité exacte d'un point 14, non accessible par l'opérateur, par rapport à la tache lumineuse 15 qui est engendrée par le rayon laser produit par l'émetteur 13, cette tache 15 étant visible sur le sol ou sur toute autre surface non accessible.

Dans la forme de réalisation qui a été illustrée en fig. 4, le bras 1, destiné à former référence en étant par exemple posé sur le sol, est équipé d'un émetteur laser 16, tandis qu'un second émetteur 4 est monté sur le bras 2, de façon telle que les deux rayons émis soient orientés parallèlement à l'axe des bras précités en passant tous deux par le pivot 3. Les rayons laser sont ainsi susceptibles de projeter deux taches lumineuses sur des parois inacessibles, l'angle α formé par les droites qui relient chaque point inaccessible au pivot 3 étant susceptible d'être lu sur le cadran de l'instrument de lecture 7.

Une fois que les émetteurs sont positionnés de façon à ce que les rayons laser émis passent par le pivot 3 qui relie les deux bras 1 et 2, l'opérateur fait en sorte que ce pivot 3 coïncide toujours, quel que soit l'angle d'ouverture des bras précités, avec le sommet du triangle défini par les deux rayons laser et la droite qui relie les deux points en direction desquels les rayons laser sont pointés, en permettant ainsi l'utilisation de formules trigonométriques connues.

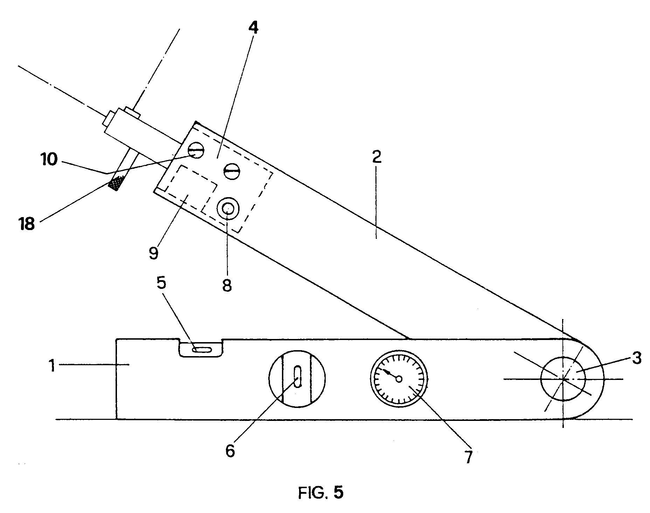

Fig. 5 montre une autre forme de réalisation dans laquelle le goniomètre est équipé d'un prisme ou d'un miroir dédoubleur, monté tournant en aval de l'émetteur 4 de manière à ce que celui-ci émette, en plus d'un rayon principal orienté parallèlement à l'axe du bras, un second rayon perpendiculaire au premier. Le déplacement angulaire de ce prisme, à l'aide de la poignée 18, permet d'individualiser avec le second rayon un plan perpendiculaire au rayon principal.

En déplaçant le bras 2 par rapport au bras 1 pour lui faire décrire un certain angle, on obtient que le plan engendré par le second rayon se déplace du même angle par rapport au plan initial.

Il va de soi qu'un prisme de dédoublement peut être adopté dans les formes de réalisation illustrées en fig. 3 et 4, étant observé qu'on peut encore imaginer d'autres modes de mise en oeuvre de l'invention.

## Revendications

1. Goniomètre, du genre comprenant deux bras (1 et 2) articulés sur un pivot (3) et équipés d'un instrument (7) pour la mesure de l'angle défini par lesdits bras, caractérisé en ce que l'un au moins des deux bras supporte un émetteur de rayon laser (4) apte à projeter le rayon parallèlement à l'axe du bras considéré, en direction d'un point non accessible manuellement, en permettant ainsi d'effectuer la mesure de l'angle défini entre la direction du rayon laser issu du bras et le plan d'appui de l'autre bras de l'appareil, et ce au moyen de l'instrument de mesure (7).

2. Goniomètre suivant la revendication 1, caractérisé en ce qu'il comprend deux émetteurs (4, 13) montés sur le même bras (2) et orientés dans des directions co-axialement opposées l'une à l'autre, de façon à ce que les rayons émis soient parallèles à l'axe du bras (2) pour permettre l'individualisation de la droite reliant le point (14) où est projeté le rayon laser provenant de l'un (4) des deux émetteurs et le point (15) disposé sur une autre paroi non accessible, où est projeté le rayon provenant de l'autre émetteur (13), en permettant de la sorte la mesure de l'angle défini par les deux rayons et le plan d'appui du bras (1).

3. Goniomètre suivant l'une quelconque des revendications 1 et 2, caractérisé en ce qu'un émetteur (16) pour la projection d'un rayon laser parallèlement à l'axe du bras et passant préférablement par le pivot (3) est prévu à l'extrémité du bras (1), tandis qu'un second émetteur (4) est monté à l'extrémité du bras (2) éventuellement muni d'un émetteur (13) de façon à ce que le rayon émis par l'émetteur (4), et, éventuellement, par l'émetteur (13), soit orienté co-axialement et parallèlement à l'axe du bras (2), en passant préférablement par le pivot (3), en vue de permettre de mesurer par l'instrument de lecture (7) l'angle défini par les deux rayons laser, à l'intérieur de limites comprises entre 0 et 360°.

4. Goniomètre suivant l'une quelconque des revendicaitons 1 à 3, caractérisé en ce que sur l'un au moins des bras, préférablement sur le bras mobile (2), est monté, en aval de l'émetteur de rayon laser, un prisme ou autre miroir de dédoublement prévu tournant et propre à permettre l'obtention de deux rayons laser visibles, l'un étant orienté parallèlement à l'axe du bras et l'autre perpendiculairement au premier, en permettant à celui-ci, moyennant déplacement angulaire du prisme ou similaire, d'individualiser un plan complet perpendiculaire audit bras (2).
